# EUROPÄISCHE PATENTANMELDUNG

(11) **EP 0 682 870 A1**
(43) Veröffentlichungstag der Anmeldung: **22.11.1995**
(21) Anmeldenummer: 95107093.7
(22) Anmeldetag: 10.05.1995
(51) Int. Cl.: A21C 9/06

(54) **Vorrichtung zum Bearbeiten stückiger Nahrungsprodukte von flacher Grundgestalt**

(30) Priorität: 13.05.1994 DE 9407968 U
(71) Anmelder: DIL Deutsches Institut für Lebensmitteltechnik e.V., D-49610 Quakenbrück (DE)
(72) Erfinder: Sprehe, Ludger, D-49439 Mühlen (DE)
(74) Vertreter: Busse & Busse Patentanwälte

(57) **Zusammenfassung**

Die beschriebene Vorrichtung bearbeitet stückige Nahrungsprodukte (1) von flacher Grundgestalt, die in einer im wesentlichen mittleren Teilungsebene in zwei ihrerseits flache, aufeinanderliegende Hälften (1a,1b) bis auf einen schmalen Verbindungsrest (1c) getrennt sind. Für einen Transport der Produkte (1) durch die Vorrichtung in einem kontinuierlichen Förderstrom ist ein horizontales, kontinuierlich umlaufendes Förderband (2) vorgesehen, mit dem die untere Produkthälfte (1a) in Mitnahmeeingriff gehalten ist. Oberhalb des Fördertrums (3) des Förderbands (2) ist eine Produktöffnerplatte (15) angeordnet, die mit einem stromaufwärts gelegenen horizontalen Endbereich (16) in einem dem der Teilungsebene der Produkte (1) entsprechenden Abstand vom Fördertrum (3) für ein Eindringen zwischen die Produkthälften (1a,1b) gehalten ist. Die Öffnerplatte (15) hat, ausgehend von ihrem horizontalen Endbereich (16), eine Verwindungskontur, die der oberen Produkthälfte (1b) eine von der horizontal gehaltenen unteren Produkthälfte (1a) entlang dem Verbindungsrest (1c) hochgeklappte Stellung fortschreitend vorgibt.

## Beschreibung

Die Erfindung betrifft eine Vorrichtung zum Bearbeiten stückiger Nahrungsprodukte von flacher Grundgestalt, die in einer im wesentlichen mittlerer Teilungsebene in zwei ihrerseits flache, aufeinanderliegende Hälften bis auf einen schmalen Verbindungsrest getrennt sind.

Bei solchen stückigen Nahrungsprodukten handelt es sich in erster Linie um flache Fleischstücke, z.B. Kalbs- oder Schweinesteaks, bei denen zwischen die beiden Hälften eine Füllung eingebracht wird, die z.B. zur Herstellung von Cordons bleus aus einer Käsescheibe und gekochtem Schinken besteht. Es können aber auch pastöse Massen oder etwa nur Gewürze zur Geschmacksbeeinflussung des Fleisches zwischen die beiden Produkthälften eingebracht werden. Grundsätzlich kann es sich bei solchen stückigen Nahrungsmitteln auch um Backwaren nach Art von Brötchen handeln, zwischen deren beide Hälften Wurst- oder Käsescheiben und ggf. Beilagen etwa zur Herstellung von Sandwiches eingebracht werden. Flache Fleischstücke wie Steaks werden aber auch zur Bildung sogenannter Schmetterlingssteacks in zwei Hälften geteilt, die entlang dem wie ein Scharnier wirkenden schmalen Verbindungsrest flach auseinandergeklappt und in dieser Form, ohne eine Befüllung oder einen Belag, zum Verkauf gebracht werden.

Das in allen diesen Fällen erforderliche Aufklappen, Befüllen und Wiederzuklappen bzw. das flache Auseinanderklappen der Nahrungsprodukte erfolgt in einem manuellen Arbeitsprozess, der sehr zeitaufwendig und mit durch die Handarbeit bedingten Ungenauigkeiten und Fehlern beim Endprodukt behaftet ist.

Der Erfindung liegt daher die Aufgabe zugrunde, eine Vorrichtung der eingangs angegebenen Art zu schaffen, die ein schonendes Bearbeiten der Produkte mit verringertem Zeitaufwand ermöglicht, mit dem Ziel, Endprodukte von gleichmäßig guter Beschaffenheit hinsichtlich des Bearbeitungsvorgangs zu erhalten.

Diese Aufgabe wird nach der Erfindung durch eine Ausgestaltung der Vorrichtung gemäß dem Anspruch 1 gelöst. Durch die bei dieser Ausgestaltung oberhalb des Fördertrums des Förderbands vorgesehene Produktöffnerplatte ist erreicht, daß die Produkte mit ihren anfangs flach aufeinanderliegenden Hälften zwanglos auf den wie eine Teilerplatte wirkende horizontalen Bereich am stromaufwärtsgelegenen Ende der Öffnerplatte auflaufen, die sodann bei der kontiunierlichen Weiterförderung des Produkts aufgrund ihrer Verwindungskontur die obere Produkthälfte allmählich entlang dem wie ein Scharnier wirkenden Verbindungsrest hochklappt, während die untere Produkthälfte im flachliegenden Mitnahmeeingriff auf dem Fördertrum gehalten wird. Dieser Bearbeitungsvorgang erfolgt schonend und mit geringem Zeitaufwand und ermöglicht, sobald die obere Produkthälfte ausreichend hochgeklappt ist, das Einbringen eines Belages wie Käse, Schinken, einer pastösen Masse oder eines Gewürzes auf die untere Produkthälfte als Produktfüllung durch eine quer zur Förderrichtung des Förderbandes arbeitende Füllvorrichtung, wobei in dieser Hinsicht gleichbleibend gute Bearbeitungsergebnisse des Endprodukts erreicht werden können.

Zur Durchführung eines Füllvorgangs des Produkts in der beschriebenen Weise ist es, durch entsprechende Ausgestaltung der Produktöffnerplatte, ausreichend, die obere Produkthälfte um weniger als 90° gegenüber der horizontalen Förderebene des Produkts, beispielsweise um 80°, aufzuklappen, woraufhin, durch die entsprechende Ausgestaltung der Produktöffnerplatte, das Wiederzuklappen des gefüllten Produkts erfolgen kann. Sofern jedoch die erfindungsgemäße Vorrichtung zur Herstellung von Schmetterlingssteaks vorgesehen ist, erfolgt, durch die entsprechend abgewandelte Ausbildung der Prduktöffnerplatte, ein Aufklappen der oberen Produkthälfte über 90° hinaus, vorzugsweise bis zu 110° bis 120° gegenüber der horizontalen Förderebene, woraufhin durch die Schwerkraft ein Umklappen der oberen Produkthälfte um den als Scharnier bildenden Verbindungsrest des Produkts in die horizontale Ebene der unteren Produkthälfte auf dem Fördertrum des Förderers erfolgt, so daß beide Produkthälften nebebeinanderliegend weitergefördert werden.

Zahlreiche weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: eine Seitenansicht einer erfindungsgemäßen Vorrichtung zum Bearbeiten stückiger Nahrungsprodukte von flacher Grundgestalt,
- Fig. 2: eine Draufsicht auf die Vorrichtung nach Fig. 1,
- Fig. 3: einen Schnitt nach der Linie III-III der Fig. 2, in gegenüber dieser vergrößertem Maßstab,
- Fig. 4: einen Schnitt nach der Linie IV-IV der Fig. 2, in gegenüber dieser vergrößertem Maßstab, und
- Fig. 5: einen Schnitt nach der Linie V-V der Fig. 2, wiederum in gegenüber dieser vergrößertem Maßstab.

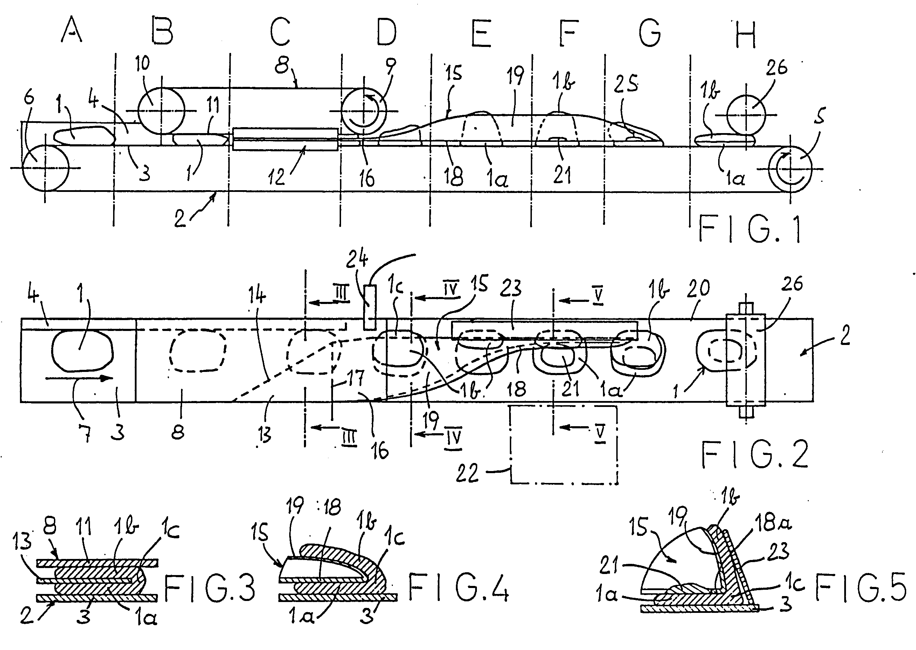

Bei der in der Zeichnung dargestellten Vorrichtung zum Bearbeiten stückiger Nahrungsprodukte 1 von flacher Grundgestalt, wie insbesondere von Fleischstücken, ist für den Transport der Produkte 1 ein horizontales, kontinuierlich umlaufendes Förderband 2 vorgesehen, dessen oberes Trum 3 des Fördertrum bildet, auf das die Produkte 1 mit einer Längskante an einer Widerlagerschiene 4 anliegend in einer ersten Station A der Vorrichtung aufgelegt werden. Das Förderband 2 läuft im Normalbetrieb kontinuierlich über Umlenkrollen 5 und 6 um, von denen die Umlenkrolle 5 in dem durch Pfeil gekennzeichneten Drehsinn angetrieben ist. Hieraus resultiert die Förderrichtung des Fördertrums 3 in Richtung des Pfeils 7 in Fig. 2.

In der Station B gelangt das auf dem Fördertrum 3 geförderte Produkt 1 unter ein Preßorgan 8 in Form eines Förderbandes, das oberhalb des Fördertrums 3 in nicht näher dargestellter Weise in der Vorrichtung abgestützt ist und um Umlenkrollen 9 und 10 umläuft, von denen die Umlenkrolle 9 in dem durch Pfeil kenntlich gemachten Drehsinn angetrieben ist. Hierdurch erhält das Untertrum 11 des Förderbandes 8 eine zu der des Fördertrums 3 des Förderers 2 parallele Laufrichtung. Beide Förderbänder 2 und 8 besitzen eine griffige Oberflächenbeschaffenheit, die einen Mitnahmeeingriff mit dem Produkt 1 gewährleistet.

Zwischen dem Fördertrum 3 des Förderbandes 2 und dem als Preßtrum wirkenden unteren Trum 11 des Förderbandes 8 wird das Produkt 1 durch Zusammenpressen geplättet, wobei der Grad des Zusammenpressens durch eine entsprechende vertikal verstellbare Lagerung des Förderbandes 8 im Vorrichtungsgestell (nicht dargestellt) regulierbar sein kann.

Sodann läuft das Produkt 1 in die Station C ein, in der ein Messer 12 in nicht näher dargestellter Weise im Vorrichtungsgestell derart abgestützt ist, daß es mit seinem Wirkbereich zwischen dem Fördertrum 3 und dem Preßtrum 11 liegt. Das Messer 12 ist von einer feststehenden flachen Schneidplatte 13 gebildet, die in Draufsicht die Form eines rechtwinkligen Dreiecks besitzt. Die Hypotenuse des rechtwinkligen Dreiecks bildet die Schneidkante 14 der Schneidplatte 13, die sich schräg in den Förderweg der Produkte 1 erstreckt. Das auf dem Fördertrum 2 herangeförderte Produkt 1 läuft allmählich auf die Schneidkante 14 auf, deren Abstand vom Fördertrum 2 gleich der durch das Zusammenwirken des Fördertrums 3 und des Preßtrums 11 vorbestimmten mittleren Teilungsebene des Produkts 1 ist.

Beim Einlaufen des Produkts 1 in die Station D der Vorrichtung ist das Produkt 1 in der mittleren Teilungsebene in zwei ihrerseits flache, aufeinanderliegende Produkthälften 1a und 1b bis auf einen schmalen, zur Förderrichtung 7 parallelen Verbindungsrest 1c mit Hilfe der Schneidplatte 13 und in Gegenanlage an der in der Station D endenden Widerlageschiene 4 geschnitten worden. Die Breite des Verbindungsrestes 1c ist durch das Maß der Quererstreckung der Schneidplatte 13 mit ihrer Schneidkante 14 zur Widerlageschiene 4 hin bestimmt, wobei dieses Maß durch eine verstellbare Lagerung der Schneidplatte 13 einstellbar sein kann.

In der Station D beginnt eine Produktöffnerplatte 15, die mit einem, bezogen auf die Förderrichtung 7, stromaufwärts gelegenen horizontalen Endbereich 16 an die Querkante 17 der Schneidplatte 13 in einem der Teilungsebene der Produkte 1 entsprechenden Abstand vom Fördertrum 3 gehalten ist, derart, daß sich bei der Weiterförderung des Produktes 1 der horizontale Bereich 16 der Produktöffnerplatte 15 zwischen die beiden Produkthälften 1a und 1b schiebt.

Die Produktöffnerplatte 15 ist zweiteilig ausgebildet, mit einem unteren horizontalen Teil 18, der mit der unteren Produkthälfte 1a in Anlage gehalten ist, und mit einem oberen, fortschreitend aus der Horizontalen mehr und mehr zur Vertikalen hin ausgerichteten Teil 19, an dem die obere Produkthälfte 1b abgestützt ist. Die Produktöffnerplatte 15 weist ausgehend von ihrem horizontalen Endbereich 16 mit ihren beiden Plattenteilen 18 und 19 eine Kontur auf, die mit dem unteren Plattenteil 18 die untere Produkthälfte 1a in der Waagerechten hält, mit der oberen Plattenhälfte 19 jedoch der oberen Produkthälfte 1b eine fortschreitend zur Vertikalen hin gerichtete Auslenkung, etwa nach Art des Arbeitsprinzips eines Pflugschares, vorgibt, so daß die obere Produkthälfte 1b schließlich um bei dem dargestellten Beispiel etwa 80° gegenüber der unteren Produkthälfte 1a hochgeklappt ist, wie dies insbesondere Fig. 5 zeigt.

Zur Ermöglichung des Hochklappens der oberen Produkthälfte 1b endet das Preßförderband 8 in der Station D, woran sich die allmähliche Aufwärtsbewegung der oberen Produkthälfte 1b durch den Plattenteil 19 anschließt. Der untere Plattenteil 18 hat im Plattenbereich 16 die gleiche Breite wie der obere Plattenteil 19, jedoch Verschmälert sich der untere Plattenteil 18 fortschreitend zu dem an den Verbindungsrest 1c des Produkts 1 angrenzenden Längsrand 20 des Fördertrums 3 hin, um etwa dann seine geringste horizontale Breite einzunehmen, wenn der obere Plattenteil 19 seine größte Auslenkung zur Vertikalen hin erreicht hat. Dieser Zustand wird nach einem Durchlaufen der Stationen E und F der Vorrichtung erreicht, wie es auch die Fig. 4 (unter Fortlassen des Preßbandes 8) und die Fig. 5 veranschaulichen.

Insbesondere zeigt Fig. 5, daß sich der untere Plattenteil 18 im Vergleich zu der Darstellung in Fig. 4 auf einen schmalen schienenförmigen Bereich 18a, angrenzend an den Verbindungsrest 1c des Produkts 1 verkleinert hat. Dadurch ist die untere Produkthälfte 1a auf ihrer Oberseite freigelegt für das Aufbringen eines Belags 21, während die obere Produkthälfte 1b hochgehalten und in dieser Stellung vom Plattenteil 19 abgestützt ist.

Das Aufbringen des Belags 21 auf die untere Produkthälfte 1a erfolgt in der Station F durch eine bei 22 strichpunktiert angedeutete Füllvorrichtung, die quer zur Förderrichtung 7 arbeitet. Beim Einbringen des Belages 21 ist das Produkt 1 an der Außenseite der oberen Produkthälfte 1b durch einenplattenformigen Anschlag 23 abgestützt, der sich entlang dem Längsrand 20 des Fördertrums 3 erstreckt.

Ein bei 24 schematisch dargestellter, dem Plattenbereich 16 zugeordneter Sensor erkennt ein herangefördertes geschnittenes Produkt1 und gibt ein geeignetes Steuersignal für die Steuerung der nachfolgenden Arbeitsvorgänge, insbesondere des Einbringens des Belags 21 mit Hilfe der Füllvorrichtung 22.

Ebenso wie der obere Plattenteil 19 aus dem Plattenbereich 16 fortschreitend aus der Horizontalen zur Vertikalen hin ausgelenkt wird, erfolgt, beginnend in der Station F bis in die Station G hinein umgekehrt eine fortschreitende Zurückführung des Plattenteils 19 aus der aufrechten Stellung zur im wesentlichen waagerechten, an den Plattenteil 19 angrenzenden Stellung.

Dies ist in der Station G erreicht, in der der obere Plattenteil 19 bei 25 endet. Hierdurch wird die obere Produkthälfte 1b wieder auf die untere Produkthälfte 1a entlang dem als Scharnier wirkenden Verbindungsrest 1c unter Umschließung des Belags 21 zurückgeklappt. Der Übergang von der aufrechten Stellung zu der zurückgeklappten flachen Stellung erfolgt durch die entsprechende allmähliche Verwindung des Plattenteils 19 fließend, um das Produkt 1 von nachteiligen Belastungen freizuhalten. Gleichzeitig mit dem Herunterklappen der Produkthälfte 1b tritt auch die untere Produkthälfte 1a unter dem schmalen schienenartigen Endbereich 18a des Plattenteils 18 hinweg aus, so daß das mit dem Belag 21 gefüllte Produkt 1 beim Eintreten in die Station H von der Produktöffnerplatte 15 vollkommen frei ist.

In der Station H ist in einem geeigneten Abstand oberhalb des Fördertrums 3, der sich nach der Dicke des gefüllten Produkts 1 richtet, eine Andruckwalze 26 mit einem weichen Walzenmantel angeordnet, durch die die Produkthälften 1a und 1b abschließend zusammengedrückt werden, um eine innige Verbindung mit dem Belag 21 herzustellen. Sodann erfolgt die Abnahme des fertiggestellten Produkts 1 in nicht näher dargestellter Weise, zum Beispiel über einen sich an die Station H anschließenden Querförderer.

Die Produktoffnerplatte 15 mit ihren beiden Plattenteilen 18 und 19 kann beispielsweise von einem biegegeformten Blechteil oder von einem Kunststofformkörper, jeweils aus nahrungsmitteltechnisch unbedenklichem Material, gebildet sein.

## Patentansprüche

1. Vorrichtung zum Bearbeiten stückiger Nahrungsprodukte von flacher Grundgestalt, die in einer im wesentlichen mittleren Teilungsebene in zwei ihrerseits flache, aufeinanderliegende Hälften bis auf einen schmalen Verbindungsrest getrennt sind, dadurch gekennzeichnet, daß für einen Transport der Produkte (1) durch die Vorrichtung in einem kontinuierlichen Förderstrom ein horizontales, kontinuierlich umlaufendes Förderband (2) vorgesehen ist, mit dem die untere Produkthälfte (1a) in Mitnahmeeingriff gehalten ist, oberhalb des Fördertrums (3) des Förderbands (2) eine Produktöffnerplatte (15) angeordnet ist, die mit einem stromaufwärts gelegenen horizontalen Endbereich (16) in einem dem der Teilungsebene der Produkte (1) entsprechenden Abstand vom Fördertrum (3) für ein Eindringen zwischen die Produkthälften (1a,1b) gehalten ist, und daß die Öffnerplatte (15), ausgehend von ihrem horizontalen Endbereich (16), eine der oberen Produkthälfte (1b) eine von der horizontal gehaltenen unteren Produkthälfte (1a) entlang dem Verbindungsrest (1c) hochgeklappte Stellung fortschreitend vorgebende Verwindungskontur aufweist.

2. Vorrichtung nach Anspruch 1, dadurch gekennzeichnet, daß die Öffnerplatte (15) zweiteilig ausgebildet ist, mit einem unteren horizontalen Teil (18), der mit der unteren Produkthälfte (1a) in Anlage gehalten ist, und mit einem oberen, fortschreitend aus der Horizontalen zur Vertikalen hin ausgelenkten Teil (19), an dem die obere Produkthälfte (1b) abgestützt ist.

3. Vorrichtung nach Anspruch 2, dadurch gekennzeichnet, daß sich der untere Plattenteil (18) der Öffnerplatte (15) fortschreitend zu dem an den Verbindungsrest (1c) des Produkts (1) angrenzenden Längsrand (20) des Fördertrums (3) hin verschmälert.

4. Vorrichtung nach Anspruch 3, dadurch gekennzeichnet, daß der untere Plattenteil (18) seine geringste horizontale Breite im Bereich der größten Auslenkung des oberen Plattenteils (19) zur Vertikalen hin einnimmt, wobei der Auslenkungswinkel des oberen Plattenteils (19) vorzugsweise etwa 60° bis 120° zur Horizontalen beträgt.

5. Vorrichtung nach einem der Ansprüche 1 bis 4, dadurch gekennzeichnet, daß der obere Plattenteil (19) vom Bereich seiner größten Auslenkung zur Vertikalen hin zum stromabwärts gelegenen Ende der Öffnerplatte (15) hin wieder allmählich zur Horizontalen hin zurückgeführt ist.

6. Vorrichtung nach Anspruch 4 oder 5, dadurch gekennzeichnet, daß im Bereich der größten Auslenkung des oberen Plattenteils (19) zur Vertikalen hin das Fördertrum (3) mit einem Anschlag (23) versehen ist, der sich entlang seinem an den Verbindungsrest (1c) der Produkte (1) angrenzenden Längsrand (20) erstreckt.

7. Vorrichtung nach einem der Ansprüche 1 bis 6, dadurch gekennzeichnet, daß dem Fördertrum (3) im Bereich der hochgeklappten oberen Produkthälfte (1b) eine quer zur Förderrichtung (7) des Produktstroms arbeitende Füllvorrichtung (22) zur Aufbringung eines Belags (21) auf den freiliegenden Bereich der unteren Produkthälfte (1a) zugeordnet ist.

8. Vorrichtung nach einem der Ansprüche 1 bis 7, dadurch gekennzeichnet, daß das Förderband (2) einen der Produktöffnerplatte (15) in Förderrichtung (7) vorgeordneten Schneidbereich mit einem zwischen dem Fördertrum (3) und einem oberen Preßorgan (8) angeordneten Messer (12) zum Trennen des Produkts (1) in die beiden Produkthälften (1a,1b) aufweist.

9. Vorrichtung nach Anspruch 8, dadurch gekennzeichnet, daß das Messer (12) von einer feststehenden flachen Schneidplatte (13) gebildet ist, deren Schneidkante (14) sich schräg in den Förderweg der Produkte (1) hineinerstreckt, wobei die Schneidplatte (13) in Draufsicht vorzugsweise die Form eines rechtwinkligen Dreiecks besitzt, dessen Hypotenuse die Schneidkante (14) der Schneidplatte (13) bildet.

10. Vorrichtung nach Anspruch 8 oder 9, dadurch gekennzeichnet, daß der der Schneidkante (14) des Messers gegenüberliegende Längsrand (20) des Fördertrums (3) mit einer Widerlagerschiene (14) für die Produkte (1) versehen ist.
